# EUROPEAN PATENT APPLICATION

(11) **EP 2 139 279 A1**
(43) Date of publication of application: **30.12.2009**
(21) Application number: 09161710.0
(22) Date of filing: 02.06.2009
(51) Int. Cl.: H04W 24/10

(54) **Systems and methods for monitoring performance of a communication system**

(30) Priority: 27.06.2008 US 147960
(71) Applicant: TELEFONAKTIEBOLAGET LM ERICSSON (publ), 164 83 Stockholm (SE)
(72) Inventor: Kenehan, Noel, 113 49, STOCKHOLM (SE); Westerberg, Erik, 122 38, ENSKEDE (SE); Berquist, Gunnar, 164 45, KISTA (SE); Olsson, Andreas, 112 45, STOCKHOLM (SE)
(74) Representative: Hasselgren, Erik Joakim

(57) **Abstract**

Monitoring the performance of communication systems is an important part of network operations.
In one aspect the invention provides a method for monitoring the performance by collecting data pertaining to a mobile terminal accessing the system. In some embodiments, the method includes receiving an identifier for identifying the mobile terminal; using the identifier to detect the UE accessing the network via an access point; and in response to detecting the UE accessing the network, transmitting to the access point a message comprising an encrypted version of the identifier with a command to initiate the collection of data pertaining to the mobile terminal.

## Description

### TECHNICAL FIELD

The present invention relates to performance monitoring of a communications network.

### BACKGROUND

Monitoring the performance of communication systems (e.g., monitoring the performance of user equipment (UE), network elements, etc.) has always been a very important part of network operations. For example, performance monitoring may enable a network operator to identify bottlenecks and take appropriate actions to improve quality.

In performance monitoring, there is an inherent trade off between the granularity (or resolution) of the performance information and the amount of performance information that needs to be sent from a node (e.g. a base station).

Typically, there are two types of performance information: (1) aggregate information and (2) trace information. Aggregate information has the lowest resolution in that it is the aggregate of a large amount of data into a single number (e.g., the total number of dropped calls in a cell). Trace information has the highest resolution in that a large amount of information about a single UE is recorded and sent to a performance monitoring system. In contrast to aggregate information, trace information can include information such as, for example, when and why a particular UE dropped its calls.

To create useful aggregate information it is important how large amount of data is aggregated into a single number. For instance, number of dropped calls is an interesting measurement, but an even more interesting measurement is the number of UEs (i.e. subscribers) that had a dropped call.

The above described measurements are possible in systems like UMTS and GSM because the producer of the aggregate information has access to a unique UE identity, but not in other systems, such as a system like long term evolution (LTE), which is in an early stage of development, that do not have access to a unique UE identity, but only to identities that can change over time. Thus, there exists a need to overcome this problem of providing the aggregate information producer with a unique UE identity.

An operator may initiate a trace (i.e., initiate the collection of trace information) for a UE by using a network management system (NMS) to select the UE (e.g., the operator may select an IMSI or IMEI associated with a UE) and other trace configuration parameters. In response, the NMS transmits to a domain manager (DM) (e.g., an operational support system (OSS)) a trace start request message that includes a globally unique trace reference (the trace reference may be made globally unique by making the PLMN ID part of the trace reference) and other trace configuration data. The trace reference is a temporary alias that is used to avoid the security risk of using the IMSI or IMEI to identify a UE.

The DM receives the trace start request from NMS and orders a network element (NE) (e.g., a mobility management entity (MME), home subscriber server (HSS), serving GPRS support node (SGSN), etc.) to enable the trace by transmitting to the NE trace configuration data that includes the trace reference. When the UE to be traced enters the network, an initial UE message is sent from the UE to the NE via a radio base station (RBS).

The NE, at reception of the initial UE message, determines whether the UE should be traced. If it determines that the UE should be traced, then the NE creates a trace recording session identifier (TRSID). This TRSID in conjunction with the trace reference is referred to as a UE trace ID (UETID). The NE then adds the UETID and other trace configuration data to an initial context setup message pertaining to the UE, which is then sent to the RBS. Upon receipt of the setup message, the RBS will start tracing (i.e., will start recording information pertaining to the UE to which the setup message pertains). The recorded trace information is stored in a file that is transmitted from the RBS to a trace collection entity (TCE). The trace file will include or otherwise be associated with the UETID. Tracing is deactivated for the UE by sending a deactivate message to the RBS.

The above described process works well in a fully integrated, completely standard, compliant system, but does not work well in other systems, such as a system like long term evolution (LTE), which is in an early stage of development.

In such systems, at least with respect to the early phases of system deployment, there may be a situation where several different NEs can create trace references without cooperation with each other. For example, an operator could start a UE Trace directly on an MME for UE-1 with trace ref x and directly from another MME for UE-2 also with trace ref x. This is problematic if both UEs are in the same RBS because it means that there is no guarantee that a trace reference will be globally unique. This could cause a receiver of the different trace data to process the trace data as though it pertained to only a single UE, when in fact it pertains to multiple UEs.

In such systems, it is also possible that a UE trace is started in one DM and the trace files are collected by another DM. This creates a situation where the collecting entity has no knowledge of the mapping between the trace reference and the IMSI/IMEI of the UE. This makes it difficult for an operator to analyze the collected data.

There exists a need to overcome at least one or more of the above described problems.

### SUMMARY

In one aspect, the patent provides a method for collecting data pertaining to a user equipment (UE) (e.g., trace data, aggregate data, and or other data). In some embodiments, the method includes: receiving an encryption key for use in encrypting an identifier for identifying the UE; encrypting the identifier using the encryption key; detecting the UE accessing a network via an access point (a trusted access point or an un-trusted access point); and in response to detecting the UE accessing the network, transmitting to the access point a message (e.g., a context setup request or a trace activation request) comprising the encrypted identifier.

The access point may be a base station and the step of detecting the UE may include receiving a message from the base station. The message received from the base station may be an initial S1 interface message transmitted by the base station in response to receiving a communication from the UE. The step of receiving the encryption key may include receiving the encryption key from a domain manager (DM) (e.g., an OSS or CN-OSS). In some embodiments, the step of receiving the key from the DM may include pulling the key from the DM or having the DM push the key.

In some embodiments, the message may further include an identifier identifying a data collection node, and the method further includes the step of transmitting the key to the data collection node, wherein the key is transmitted to the data collection node from the DM. The access point is configured to collect data pertaining to the UE in response to receiving the message and is further configured to transmit to the data collection node the collected data together with the encrypted identifier. The data collection node may use the encryption key to decrypt the encrypted identifier.

In some embodiments, the method further includes receiving an instruction to collect data pertaining to the UE, wherein the encrypted identifier is transmitted to the access point only if the instruction has been received.

In some embodiments, the method is performed by a network element, and the network element is an MME or SGSN.

In some embodiments, the method further includes: transmitting, from the access point, a message to a second access point, wherein the message includes the encrypted identifier and the step of transmitting the message is performed as part of a hand off of the UE from the first access point to the second access point.

In another embodiment, the method includes: receiving an identifier for identifying the UE and an encrypted version of the identifier; using the identifier to detect the UE accessing a network via an access point; and in response to detecting the UE accessing the network, transmitting to the access point a message comprising the encrypted version of the identifier.

In another aspect, the present invention pertains to a network element. In some embodiments, the network element includes: a receiver for receiving an encryption key; a data storage unit storing computer instructions; and a processor coupled to the data storage unit for executing the computer instructions, wherein the computer instructions comprise: computer instructions that are configured to use the received encryption key to encrypt an identifier that identifies a user equipment (UE); computer instructions that are configured to detect the UE accessing a network via an access point; and computer instruction configured to transmit to the access point a message comprising the encrypted identifier.

In another aspect, the present invention pertains to a communication system. In some embodiments, the communication system includes: a network element storing an encryption key; a data collection node storing the encryption key; and a base station for providing network access to a user equipment (UE), wherein (1) an identifier identifies the UE, (2) the network element is configured to: (a) use the encryption key to encrypt the identifier and (b) transmit to the base station a message containing the encrypted identifier and an identifier identifying the data collection node, (3) the base station is configured to: (a) collect data pertaining to the UE and (b) transmit to the data collection node the collected data together with the encrypted identifier, and (4) the data collection node is configured to decrypt the encrypted identifier using the encryption key.

In some embodiments, the network element is further configured to detect when the UE accesses the network via the base station and is configured to transmit the encrypted identifier to the base station in response to detecting the UE accessing the network.

In some embodiments, the communication system further includes a domain manager (e.g., a CN-OSS). The domain manager may be configured to transmit the encryption key to the network element. The system may further include a network management system. The NMS may be configured to transmit the encryption key to the network element through the DM.

In some embodiments, the base station is configured to transmit to a second base station a message comprising the encrypted identifier as part of a process of handing off the UE to the second base station.

The above and other aspects and embodiments are described below with reference to the accompanying drawings.

### BRIEF DESCRIPTION OF THE DRAWINGS

The accompanying drawings, which are incorporated herein and form part of the specification, illustrate various embodiments of the present invention and, together with the description, further serve to explain the principles of the invention and to enable a person skilled in the pertinent art to make and use the invention. In the drawings, like reference numbers indicate identical or functionally similar elements.

FIG. 1. illustrates a communication system according to embodiments of the invention.

FIG. 2 illustrates the delivery of encryption keys to trusted nodes.

FIG. 3 is a flow chart illustrating a process according to some embodiments of the invention.

FIG. 4 is a flow chart illustrating a process according to some embodiments of the invention.

FIG. 5 is a functional block diagram of a network element according to some embodiments.

### DETAILED DESCRIPTION

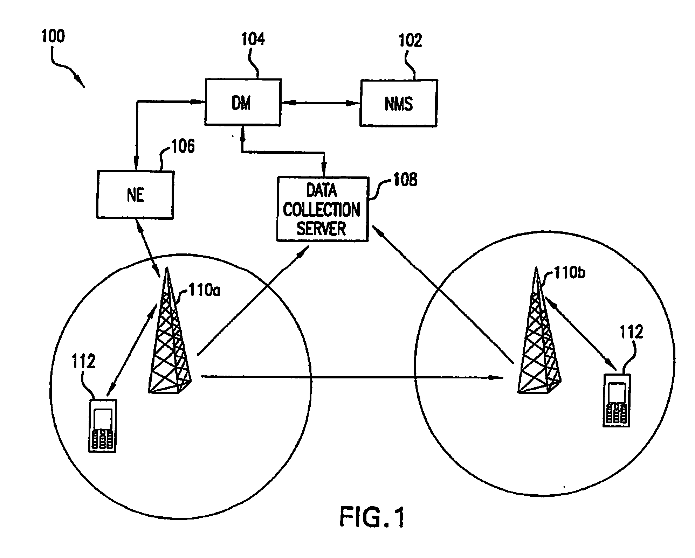

Referring to FIG. 1, FIG. 1 illustrates a communication system 100 according to some embodiments of the invention. As illustrated in FIG. 1, communication system 100 includes a network management server 102, a domain manager (DM) 104 (e.g., an operational support system (OSS) such as a core network OSS (CN-OSS)), a trusted network element (106) (e.g., a mobility management entity (MME), home subscriber server (HSS), etc.), a data collection system (DCS) 108, radio base stations 110a and 110b, and a mobile terminal 112, which may be referred to as user equipment (UE) 112.

When a network operator wants to collect information (e.g., trace information) about UE 112, the network operator may initiate the trace using any one of, for example, NMS 102, DM 104 or NE 106. The network operator may initiate the trace by inputting or selecting from a list an identifier identifying UE 112 and issuing an activate trace command. The identifier identifying UE 112 that is input or selected by the network operator may be an international mobile equipment identity (IMEI), an international mobile subscriber identity (IMSI), IMEI and software version number (IMEIsv), or other similar identifier.

In some embodiments, when an operator initiates a trace using NMS 102, NMS 102 may transmit to NE 106 via DM 104 a trace activate command together with an encryption key and the UE identifier (e.g., the IMEI, IMSI, IMEIsv). The command and encryption key may be transmitted to NE 106 using a Northbound Interface (itf-N).

The NE 106, in response to receiving the command monitors the network so as to detect when UE 112 enters system 100. NE 106 may detect this event by receiving a message from the base station 110 that UE 112 is currently using to access system 100 (we will assume that this base station is base station 110a). This message may be an initial S1 interface message.

In response to detecting UE 112 accessing system 100, NE 106 may transmit to base station 110a a message that includes an encrypted UE identifier. For example, when NE 106 receives the trace command from NMS 102, NE 106 may use the encryption key to encrypt the UE identifier included in the message, and when NE 106 detects UE 112 entering the network, NE 106 transmits the encrypted UE identifier to base station 110a. In some embodiments, NE 106 transmits the encrypted UE identifier to base station 110a by including the encrypted identifier in a UE context setup request message or a trace activation message that is transmitted to the base station. In addition to including the encrypted identifier, the message sent to base station 110a may also include an identifier identifying a DCS (e.g., DCS 108).

In response to receiving the message from NE 106, base station 110a starts collecting data pertaining to UE 112. This data may be stored in a file. At some point (e.g., after a certain amount of time has expired or after a certain amount of data has been collected), base station 110a transmits the collected data along with the encrypted identifier to the identified DCS without the DCS requesting the data. Additionally, if base station 110a hands off UE 112 to base station 110b, base station 110a may transmit to base station 110b the encrypted UE identifier and a command instructing base station 110b to collect information pertaining to UE 112. The command would preferably include the identifier identifying the DCS so that base station 110b can push to the DCS the collected data together with the encrypted identifier. Alternatively, instead of the base stations 110 pushing to the DCS the collected data and encrypted identifier, the base stations may send a message to the DCS informing the DCS that the base station has data for the DCS to collect. In response to this message, the DCS may then retrieve the collected data and encrypted identifier from the base station. For example, in some embodiments, in response to the message from the base station 110, the DCS may pull the data from the base station (e.g., the DCS may send a request for the data to the base station, which will then transmit the data to the DCS).

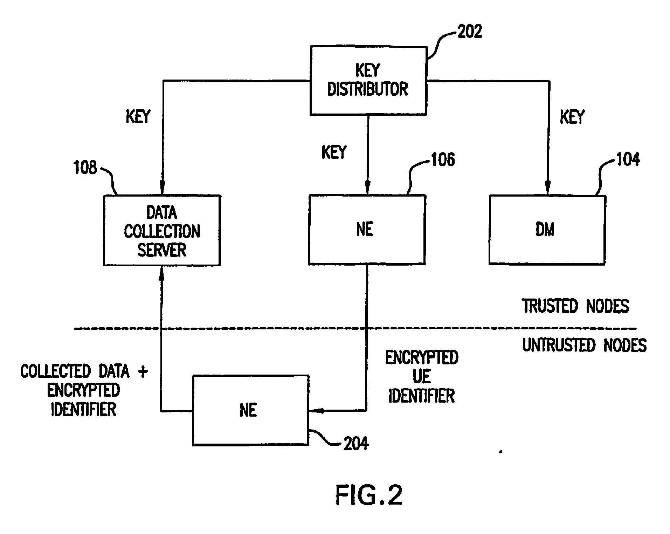

The DCS that receives the collected data, uses an encryption key (e.g., the encryption key used to encrypt the identifier or another key) to decrypt the encrypted UE identifier that accompanies the data to recover the UE identifier. As illustrated in FIG. 2, a key distributor 202 distributes an encryption key to trusted nodes (e.g., DCS 108, NE 106 and DM 104), but not to the un-trusted node NE 204, which may be an access point (e.g., an RBS). As further illustrated in FIG. 2 and as was described above, NE 106 may send to NE 204 a UE identifier that has been encrypted using the encryption key. In some embodiments, key distributor 202, which may be part of NMS 102, periodically (e.g., daily) distributes a new encryption key to the trusted nodes.

Because the UE identifier is globally unique, the DCS will not suffer from the problem of receiving different trace data for different UEs were the different trace data is associated with the same trace reference. Further, DCS will not face a situation where it has no knowledge of the mapping between the trace reference and the identifier (e.g., IMSI/IMEI) of the UE because, in the embodiments described above, the encrypted UE identifier is the trace reference and the DCS will have the encryption key needed to decrypt the encrypted UE identifier. Moreover, because the base station receives the encrypted UE identifier and not the actual UE identifier, un-trusted base stations (e.g., NE 204) can be used to collect data pertaining to a UE without violating any privacy concerns.

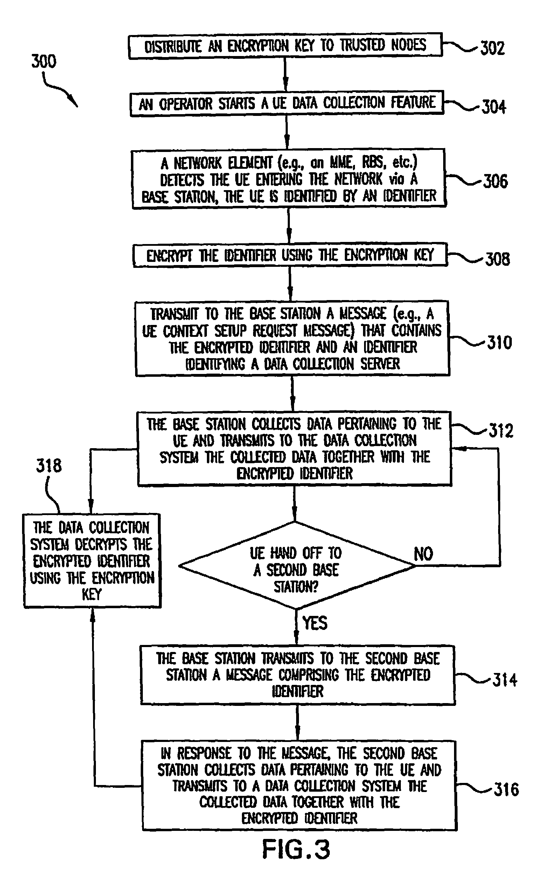

Referring now to FIG. 3, FIG. 3 is a flow chart illustrating a process 300 according to some embodiments of the invention. Process 300 may begin in step 302, wherein an encryption key is distributed to a set of trusted nodes (e.g., NE 106 and DCS 108). As described above, this step may be performed periodically by key distributor 202. In some embodiments, instead of the key distributor distributing the keys to the trusted nodes, the trusted nodes may receive the key by pulling the key from the key distributor (e.g., a trusted node may send a key request message to the key distributor, which, in response, may transmit a key to the trusted node).

In step 304, an operator activates a data collection feature for UE 112. For example, the operator may perform this step at NE 106 or DM 104. If performed at DM 104, the DM 104 transmits an identifier for UE 112 (e.g., an IMSI) to NE 106. If performed at NE 106, the operator my input or select the UE 112 identifier.

In step 306, NE 106 detects UE 112 entering the network via base station 110a (e.g., NE 106 may receive from base station 110a an initial UE message). In step 308, NE 106 encrypts the UE 112 identifier. In step 310, NE 106 transmits to base station 110a a message (e.g., an initial context setup request for UE 112) that contains the identifier encrypted in step 308, a command to initiate data collection for UE 112, and an identifier identifying DCS 108 (e.g., an IP address of DCS 108).

Next (step 312), base station 110a collects data pertaining to UE 112 and transmits to DCS 108 a file containing the collected data and the encrypted identifier. The encrypted identifier may be included in the file. If base station 110a hands off UE 112 to base station 110b, then process 300 may proceed to step 314, otherwise it may proceed back to step 312.

In step 314, base station 110a transmits to base station 110b a message comprising the encrypted identifier that was transmitted to base station 110a in step 310. In response to the message, base station 110b collects data pertaining to UE 112 and transmits to DCS 108 a file containing the collected data and the encrypted identifier (step 316). Next (step 318), DCS 108 uses an encryption key to decrypt the encrypted identifier so as to identify the unique UE to which the collected data pertains.

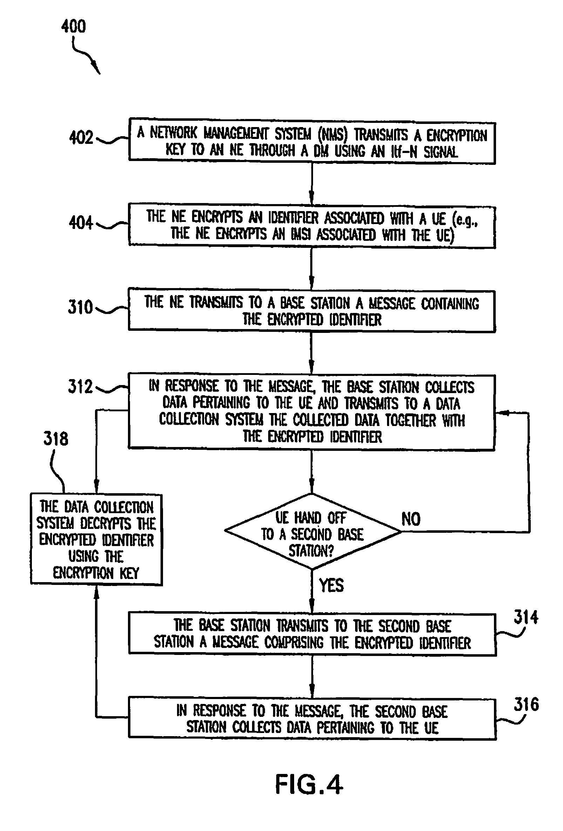

Referring now to FIG. 4, FIG. 4 is a flow chart illustrating a process 400 according to some embodiments of the invention. Process 400 may begin in step 402, where, in response to an operator using NMS 102 to initiate a data collection feature (e.g., a trace) for UE 112, NMS 102 transmits to NE 106 via DM 104 a UE 112 identifier and an encryption key or an encrypted UE 112 identifier. The data may be transmitted to NE 106 using an itf-N interface. In step 404, if an encryption key was sent in step 402 rather than the encrypted UE 112 identifier, NE 106 encrypts the identifier using the encryption key. After step 404, steps 310-318 are performed. These steps are described above with reference to FIG. 3.

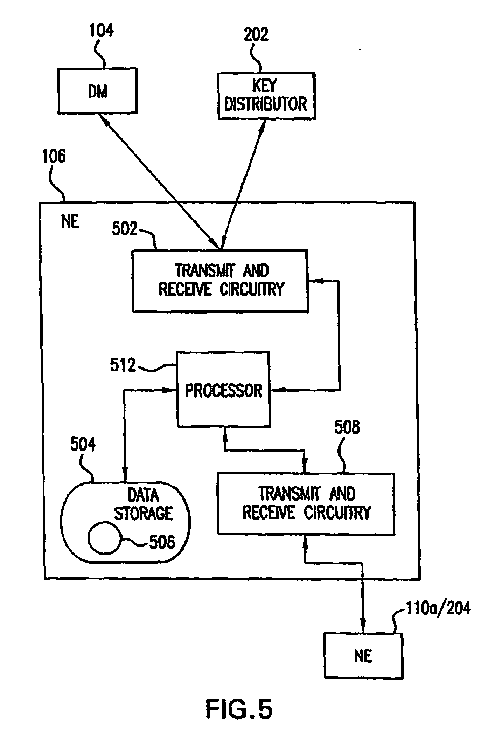

Referring now to FIG. 5, FIG. 5 is a functional block diagram illustrating some components of NE 106 according to some embodiments. As illustrated in FIG. 5, NE 106 includes: circuitry 502 for enabling NE 106 to communicate with DM 104 and key generator 202; circuitry 508 for enabling NE 106 to communicate with NE 110a/204; a data storage 504 (e.g., non-volatile memory, disk drive, etc) storing software 506; and a processor 512 for executing software 506. Software 506 is configured such that, when it is executed by processor 512, it causes NE 106 to perform the functions described above.

While various embodiments of the present invention have been described above, it should be understood that they have been presented by way of example only, and not limitation. Thus, the breadth and scope of the present invention should not be limited by any of the above-described exemplary embodiments.
Additionally, while the processes described above and illustrated in the drawings are shown as a sequence of steps, this was done solely for the sake of illustration. Accordingly, it is contemplated that some steps may be added, some steps may be omitted, and the order of the steps may be re-arranged.

## Claims

1. A method for collecting data pertaining to a user equipment (UE), the method comprising:
receiving an encryption key for use in encrypting an identifier for identifying the UE;
encrypting the identifier using the encryption key;
detecting the UE accessing a network via an access point; and
in response to detecting the UE accessing the network, transmitting to the access point a message comprising the encrypted identifier.

2. The method of claim 1, wherein the access point is a base station and the step of detecting the UE comprises receiving a message from the base station.

3. The method of claim 2, wherein the message received from the base station is an initial S1 interface message transmitted by the base station in response to receiving a communication from the UE.

4. The method of claim 1, 2 or 3 wherein the step of receiving the encryption key comprises receiving the encryption key from a domain manager (DM).

5. The method of claim 4, wherein the message further includes an identifier identifying a data collection node, and the method further comprises the step of transmitting the key to the data collection node, wherein the key is transmitted to the data collection node from the DM.

6. The method of claim 5, wherein the access point is configured to collect data pertaining to the UE in response to receiving the message and is further configured to transmit to the data collection node the collected data together with the encrypted identifier, wherein the data collection node uses the encryption key to decrypt the encrypted identifier.

7. The method of any of the preceding claims wherein the method is performed by a network element, and the network element is an MME or SGSN.

8. The method of claim 1, wherein the message is a UE context setup request or a trace activation request.

9. A network element, comprising:
a receiver for receiving an encryption key;
a data storage unit storing computer instructions; and
a processor coupled to the data storage unit for executing the computer instructions, wherein the computer instructions comprise:
computer instructions that are configured to use the received encryption key to encrypt an identifier that identifies a user equipment (UE);
computer instructions that are configured to detect the UE accessing a network via an access point; and
computer instruction configured to transmit to the access point a message comprising the encrypted identifier.

10. The network element of claim 9, wherein the access point is a base station, the network element further includes an interface for communicating with the base station, and the computer instructions configured to detect the UE comprise computer instructions for processing a message that was transmitted from the base station and received by the network element via the interface.

11. The network element of claim 10, wherein the message received from the base station is an initial S1 interface message transmitted by the base station in response to receiving a communication from the UE.

12. The network element of claim 9, 10 or 11, wherein the encryption key is received by the network element from a domain manager (DM).

13. The network element of claim 9, wherein the message further includes an identifier identifying a data collection node.

14. The network element of claim 9, wherein the message is a UE context setup request or a trace activation request.

15. The network element of claim 9, wherein the computer instruction configured to transmit to the access point the message comprising the encrypted identifier are configured to transmit the message in response to detecting the UE accessing the network, and the computer instructions that are configured to use the received encryption key to encrypt the identifier are configured to encrypt the identifier using the key in response to detecting the UE accessing the network.

16. A communication system, comprising:
a network element storing an encryption key;
a data collection node storing the encryption key; and
a base station for providing network access to a user equipment (UE), wherein
an identifier identifies the UE,
the network element is configured to: (a) use the encryption key to encrypt the identifier and (b) transmit to the base station a message containing the encrypted identifier,
the base station is configured to: (a) collect data pertaining to the UE and (b) transmit to the data collection node the collected data together with the encrypted identifier, and
the data collection node is configured to decrypt the encrypted identifier using the encryption key.

17. The communication system of claim 16, wherein the network element is further configured to detect when the UE accesses the network via the base station and is configured to transmit the encrypted identifier to the base station in response to detecting the UE accessing the network.

18. The communication system of claim 16, wherein the message further includes an identifier identifying the data collection node.

19. The communication system of claim 16, wherein the message is a UE context setup request or a trace activation request.

20. The communication system of claim 16, wherein the network element is an MME or SGSN.

21. The communication system of claim 16, further comprising a domain manager, wherein the domain manager (DM) is configured to transmit the encryption key to the network element.

22. A method performed by a network element (NE) for collecting data pertaining to a user equipment (UE), the method comprising:
receiving an identifier for identifying the UE and an encrypted version of the identifier;
using the identifier to detect the UE accessing a network via an access point; and
in response to detecting the UE accessing the network, transmitting to the access point a message comprising the encrypted version of the identifier.

23. The method of claim 22, wherein the access point is a base station and the step of detecting the UE comprises receiving a message from the base station.

24. The method of claim 23, wherein the message received from the base station is an initial S1 interface message transmitted by the base station in response to receiving a communication from the UE.

25. The method of claim 22, wherein the message further includes an identifier identifying a data collection node.

26. The method of claim 22, wherein the message is a context setup request or a trace activation request.
